# EUROPEAN PATENT SPECIFICATION

(11) **EP 0 349 642 B1**
(45) Date of publication and mention of the grant of the patent: **26.10.1994**
(21) Application number: 88902550.8
(22) Date of filing: 11.03.1988
(51) Int. Cl.: F16K 31/06, G01B 7/02, G01D 5/20

(54) **Displacement sensor**
Lagesensor
Capteur de position

(30) Priority: 14.03.1987 JP 59898/87; 20.03.1987 JP 67605/87
(43) Date of publication of application: 10.01.1990
(73) Proprietor: TECHNO EXCEL KABUSHIKI KAISHA, Suzaka-shi, Nagano-ken (JP)
(72) Inventor: MIYAZAWA, Shozo K.K. Kambayashi Seisakujo, Nagano 382 (JP); KOBAYASHI, Takanori K.K. Kambayashi Seisakujo, Suzaka-shi Nagano 382 (JP)
(74) Representative: Calderbank, Thomas Roger
(86) International application number: PCT/JP88/00266
(87) International publication number: WO 88/07152

(56) References cited:
- GB-A- 551 790
- JP-B- 6 024 572
- US-A- 1 593 384
- US-A- 2 869 048
- PATENT ABSTRACTS OF JAPAN vol. 8, no. 265 (P-318)(1702) 05 December 1984,& JP-A-59 133405 (NIPPON DENSO K.K.) 31 July 1984
- PATENT ABSTRACTS OF JAPAN vol. 4, no. 33 (M-3)(515) 21 March 1980,& JP-A-55 6053 (SADAKICHI SUGIMURA) 17 January 1980
- PATENT ABSTRACTS OF JAPAN vol. 10, no. 48 (P-431)(2105) 25 February 1986,& JP-A-60 192212 (HITACHI KASEI KOGYO K.K.) 30 September 1985
- PATENT ABSTRACTS OF JAPAN vol. 10, no. 384 (E-466)(2441) 23 December 1986,& JP-A-61 176104 (SECOH GIKEN INC.) 07 August 1986
- JP-U-521355211

## Description

The present invention relates to a displacement sensor including a coil and a plunger.

JP-A-61-176104 or JP-A-61-172011 both disclose a displacement sensor in which a plunger of magnetizable material moves in the axial direction in a hole in a coil. The plunger or coil is connected to a displacement body for measuring the displacement of that body by measuring the change of the reactance or frequency of the coil. Thus, this document corresponds to the pre-characterising part of claim 1.

In the present invention the plunger has a body and an end part, which end part comprises at least one end face and at least on side face, the end face having a periphery of which at least a part coincides (in plan) with a part of the periphery of the body, and the plane of the side face being non-parallel to the axis of the plunger.

With the present invention, the characteristic curve of the plunger stroke and the frequency will be almost linear, so precise measuring can be executed. If tapered end section of the plunger is long, the displacement sensor which has long stroke and wide effective measuring range can be achieved. The characteristic curve is linear, so it will be easy to control, even by an inexpensive microprocessor.

Moreover, if the angle and the shape of the tapered section of the plunger is varied, the characteristic curve of the reactance (or the frequency) can be changed at user's option. Unlike the conventional displacement sensor, the front end of the plunger can be previously inserted into the centre hole of the coil, so that the sensor can be compacted in size.

Embodiments of the present invention will now be described in detail, by way of example, with reference to the accompanying drawings, in which:
Fig 1 shows an exploded perspective view of an example of a plunger which may be used in the present invention;
Fig 2 shows a perspective view of another example of the plunger;
Fig 3 shows a plan view of another example of the plunger;
Fig 4 shows a front sectional view of the displacement sensor of a first embodiment of the present invention;
Fig 5 shows a plan view of the plunger of the first embodiment;
Fig 6 shows a graph of the characteristic curve of the plunger stroke and the frequency in the first embodiment;
Fig 7 shows a front sectional view of a displacement sensor being a second embodiment of the present invention; and
Fig 8 shows a front sectional view of a displacement sensor being a third embodiment of the present invention.

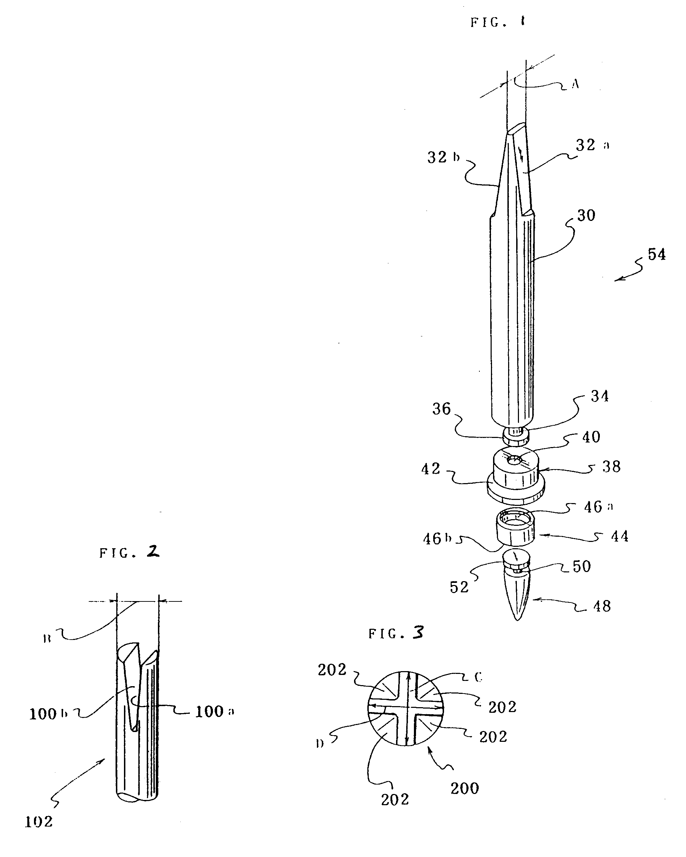

Embodiments of the present invention will now be described in detail with reference to the accompany drawings. However, before describing such embodiments, the configuration of plungers which may be used with the present invention will be described. As shown in Fig 1, the plunger 30 is made of a magnetisable round rod. Its upper end section is tapered and both sides thereof are cut to form tapered faces 32a and 32b. A part A is then formed on the upper end face of the plunger 30 with the width of the part A being the same as the diameter of the plunger 30. The sectional area of the tapered section gradually reduces as it approaches the upper end.

The purpose of the part A, whose width is the same as the diameter of the plunger 30 in the tapered section thereof, is to maintain a balanced operation of the plunger 30. Note that the front end of the plunger may, as shown in Fig 2, have its upper section divided into two pieces which respectively have tapered faces 100a and 100b. In this case, the part B has the same width of the plunger 102. The tapered section is not essentially required to be continued. If both ends of the part B are the same as the diameter of the plunger 102, it is allowed even the tapered section is divided. And as shown in Fig 3, the plunger may have parts C and D with a width which is the same as the diameter of the plunger 200. The midway parts 202 of the plunger 200 are in the form of slopes or curved faces to be tapered. In the plunger in Fig 3, there can be bored a hole in the centre thereof.

In Fig 1 again, the lower section of the plunger 30 has the small-diameter section and the flange 36 at the lower end.

Fig 1 shows a cap 38, and the small-diameter section 34 of the plunger 30 is fitted into the through-hole 40 which is bored in the upper face of the cap 38 and is prevented from coming off due to the flange 36. A flange 42 is also found at the lower end of the cap 38.

A body 44, which is made of elastic material, is accommodated in the cap 38 and there are bored bottomed holes 46a and 46b in the upper face and bottom face thereof. The diameters of the innermost sections of the holes 46a and 46b are larger than diameters of the entry section thereof, and the flange 36 of the plunger 30 is pressed into the hole 46a to engage therewith.

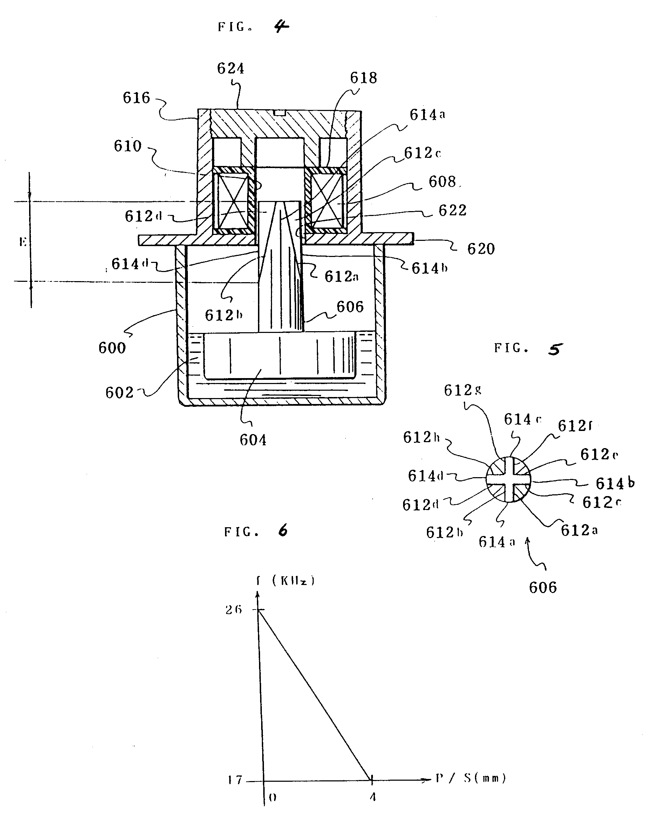

A first embodiment will now be explained with reference to Figs 4 to 6.

First, the structure of the displacement sensor of this embodiment will be described.

Liquid 602 whose position of liquid surface will be measured is held in a container 600.

A float 604 is a displacing body is made of hard plastic and it can float in the liquid 602.

A plunger 606 is made of magnetizable material, and its lower end is fixed on the upper face of the float 604. The shape of the upper end face of the plunger 606 may be as shown in Fig 5, formed like a cross. Alternatively, the plungers of Figs 1 or 2 may be used in a similar way to the plunger of Fig 3. There are four (one or more may be acceptable) places being close to an inner face of a centre hole 610 of a coil 608 at the upper end of the plunger. Note that, in the displacement sensor, the movement of the plunger 606 is not required to be highly balanced, so that even a plunger having only one tapered face may be used. The clearance between the outer face of the plunger 606 and the inner face of the centre hole 610 of the coil 608 may be varied including slidable contact and enough distance due to uses. There are tapered faces 612a, 612b, 612c, 612d, 612e, 612f, 612g and 612h having a length E and suitable inclination of the plunger 606, and there are also four tapered ridges 614a, 614b, 614c, and 614d therein. Note that the tapered faces 612a, 612b, 612c, 612d, 612e, 612f, 612g and 612h are not only flat faces but curved or stepped faces, and the inclination angle thereof is determined at the user's option. A hole or a dent may be bored in the centre of the upper end face of the plunger 606.

The coil 608 is fixed in a frame 616. The coil 608 is formed by winding wire around a bobbin 618 but the bobbin 618 may be omitted in some cases.

The frame 616 has a flange with a through-hole 622 whose diameter is the same as the centre hole 610 of the coil 608 (in which the plunger 606 can be inserted). The hole 622 thus permits access to the inner space of the container 600. Note that even when there is no liquid in the container 600, the upper end of the plunger 606 extends into the centre hole 610 of the coil 608.

A pushing member 624 is screwed in the upper section of the frame 616 of press and to fix the coil 608 on the inner bottom face of the frame 616.

Note that an oscillator (not shown) is connected to the coil 608.

Next, the action of the displacement sensor will now be described.

When there is liquid 602 in the container 600, the float 604 ascends with the change of the liquid surface, so that the plunger 606 also ascends. The coil 608 is previously attracted, so that magnetic flux increases and the reactance of the coil 608 changes due to the movement of the plunger 606 relative to the coil 608. As there are four tapered ridges 614a, 614b, 614c and 614d in the upper section of the plunger 606, the cross sectional area corresponding to the bottom face of the coil 608 gradually increased (the area changes with ascending of the plunger 606).

Due to the change of the reactance of the coil 608, the frequency of the oscillator (not shown) connected to the coil 608 changes in proportion to the change of the reactance, so that the distance of ascent (or the amount of displacement) of the plunger 606 can be measured as a change of the frequency of the oscillator. The measured value is arithmetically transmitted by a microprocessor to a display.

The characteristic curve of the frequency of the coil 608 and the stroke P/S of the plunger 606 in this embodiment is shown in Fig 6.

Fig 6 shows that the characteristic curve is almost linear because of the tapered section of the front end of the plunger 606, and, for example, the change of the frequency of the coil 608 is 9KHz when the stroke of the plunger 606 is 4mm. In a conventional displacement sensor under the same condition, the change of the frequency was 3KHz when the stroke of the plunger was 4mm. This shows that the resolution of the displacement sensor of the present embodiment is three times that of the conventional one.

Note that, the plunger 606 has four ridges 614a, 614b, 614c and 614d but other plungers can also be used. Examples are: a plunger which is diagonally cut to its axial direction; a plunger whose front end is like a cone; a plunger having two ridges or three ridges or ...; and a plunger whose lower part has a sectional shape which is not a circle (e.g. a square pillar).

Moreover, the displacement body is not limited to he float. For example, if a diaphragm is used as the displacement body, the change of the pressure can be measured. And if the plunger is fixed, a coil may be moved with the displacement body.

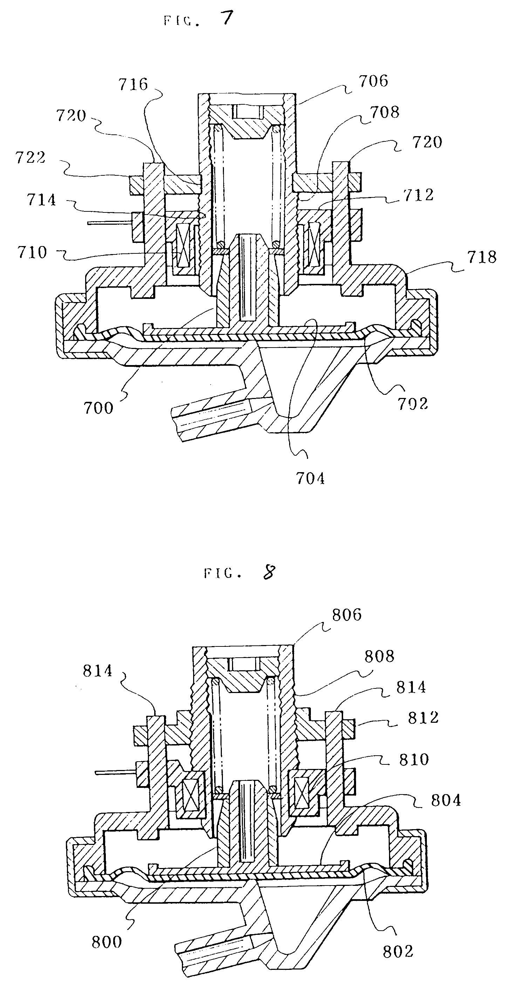

A second embodiment will now be explained with reference to Fig 7.
in the displacement sensor of the second embodiment a plunger 700 has the plunger of the first embodiment, a tapered upper end section. The lower end of the plunger 700 is fixed at a pressure receiving body 704 which is made of non-magnetizable material and which is fixed at a diaphragm 704 as a displacement body.

A cylinder 706 is made of non-magnetizable material, and a male screw 708 is threaded on the outer face thereof. The plunger 700 is guided in its up-and-down movement by the inner face of the cylinder 706.

There is a female screw 714 threaded on an inner face of a bobbin 712 of a coil 710, and the coil 710 is crewed over the male screw 708 of the cylinder 706.

The cylinder 706 is rotatable on its axis, but is not able to move to and away from a sensor 718 because a supporting plate 722 is engaged with the groove 716 on the outer face of the cylinder 706 and is fixed at guides 720 which are vertically provided on the sensor 718.

The coil 710 is guided in the axial direction thereof and is prevented rotation by guides 720 when the cylinder 706 is rotated.

With this structure, the mutual relative position of the coil 710 and the plunger 700 can be adjusted, so that scattering of initial value of the reactance or the frequency of the coil 710 can be adjusted.

The third embodiment will now be explained with reference to Fig 8. The displacement sensor of this as a embodiment permits, as in the second embodiment, the mutual relative position between the coil and the plunger to be adjusted.

A plunger 800 has a tapered upper end section. The shape of the plunger 800 may be the same as the plunger of the first embodiment. The structure of the plunger, a diaphragm as a displacement body, and a pressure receiving body 804 are the same as the second embodiment.

A cylinder 806 is made of non-magnetizable material, and a male screw 800 is threaded on the outer face thereof. The plunger 800 is guided its up-and-down movement by the inner face of the cylinder 806. A coil 810 covers the cylinder 806. The coil is rotatable on the cylinder 806 but is unable to move in the axial direction thereof.

A supporting plate 812 is screwed over the male screw 808 of the cylinder 806 and is fixed at prescribed position of guides 814. When the cylinder 806, which is screwed to the supporting plate 812, is rotated, the cylinder 806 vertically moves and the coil 810 also vertically moves along the guides 814. With this structure, the mutual relative position between the plunger 800 and the coil 810 is adjustable, so that the scattering of the initial value of the reactance or the frequency of the coil 810 can be adjusted.

## Claims

1. A displacement sensor including a coil (608) and a plunger (606), which is made of magnetizable material, provided in the centre hole (610) of said coil (608) and being capable of moving relative to the coil (608) in the axial direction thereof, where said coil (608) or said plunger (606) is connected to a displacement body (604) for measuring the amount of displacement by measuring the change of the reactance or the frequency of said coil (608);
characterised in that:
the plunger (606) has a body and an end part, which end part comprises at least one end face and at least one side face (612a, 612b, 612c, 612d, 612e, 612f, 612g, 612h) the end face having a periphery of which at least a part coincides (in plan) with a part of the periphery of the body, and the plane of the side face (612a, 612b, 612c, 612d, 612e, 612f, 612g, 612h) being non-parallel to the axis of the plunger (606).

2. A displacement sensor according to claim 1, further comprising:
a cylinder body (806) for guiding the movement of said plunger (800) by an inner face thereof, said cylindrical body (806) is made of non-magnetizable material, and a male screw section (808) is grooved on an outer surrounding face thereof;
supporting means (812) having a female screw section which can be engaged with the male screw section (808) said supporting means (812) being fixed at a prescribed axial position wherein said cylindrical body (806) is guided in the axial direction when the male screw section of said cylindrical body is rotated; and
guide means (814) for guiding said coil (810) to move to and away from said sensor proper in the axial direction, said guide means (814) prevents said coil (810) from rotating;
wherein said plunger (800) is connected to said displacement body (804) and said coil or the coil bobbin of said coil rotatably covers said cylindrical body and said coil or the coil bobbin of said coil is unable to move in the axial direction.

3. A displacement sensor according to claim 1, further comprising:
a cylindrical body (706) for guiding the movement of said plunger (700) by an inner face thereof said cylindrical body being made of non-magnetizable material, having a male screw section (708) grooved on an outer surrounding face thereof;
a female screw section (714) grooved on the inner face of the centre hole of the coil bobbin (712) of said coil, said female screw section being engagable with said male screw section of said cylindrical body (706);
supporting means (722) permitting the cylinder (706) to rotate around the axis (direction of the plunger) whilst causing the cylinder to be axially fixed; and
guide means (720) for guiding said coil bobbin (712) moving in the axial direction when said cylindrical body is rotated, said guide means prevents said coil from rotating;
wherein said plunger (700) is connected to said displacement body (704).

## Patentansprüche

1. Verschiebungssensor mit einer Spule (608) und einem Kolben (606), der aus magnetisierbarem Material gemacht ist, in dem Mittelloch (610) der Spule (608) vorgesehen ist und sich relativ zu der Spule (608) in deren axiale Richtung bewegen kann, wobei die Spule (608) oder der Kolben (606) mit einem Verschiebungskörper (604) zum Messen des Betrages der Verschiebung durch Messen der Änderung der Reaktanz oder der Frequenz der Spule (608) verbunden ist;
dadurch gekennzeichnet,
daß der Kolben (606) einen Körper und ein Endteil aufweist, welches Endteil mindestens eine Endfläche und mindestens eine Seitenfläche (612a, 612b, 612c, 612d, 612e, 612f, 612g, 612h) aufweist, wobei die Endfläche einen Umfang aufweist, von dem mindestens ein Teil sich mit einem Teil des Umfanges des Körpers (in der Ebene) deckt, und die Ebene der Seitenfläche (612a, 612b, 612c, 612d, 612e, 612f, 612g, 612h) nicht parallel zu der Achse des Kolbens (606) ist.

2. Verschiebungssensor nach Anspruch 1, weiter mit:
einem Zylinderkörper (806) zum Führen der Bewegung des Kolbens (800) an einer inneren Fläche davon, wobei der zylindrische Körper (806) aus einem nicht magnetisierbaren Material gemacht ist und ein männlicher Schraubenabschnitt (808) auf einer äußeren umgebenden Fläche davon gerillt ist;
Tragemittel (812) mit einem weiblichen Schraubenabschnitt, der in Eingriff mit dem männlichen Schraubenabschnitt (808) stehen kann, wobei das Tragemittel (812) an einer vorgeschriebenen axialen Position befestigt ist, wodurch der zylindrische Körper (806) in der axialen Richtung geführt ist, wenn der männliche Schraubenabschnitt des zylindrischen Körpers gedreht wird; und Führungsmittel (814) zum Führen der Spule (810), um sich zu dem eigentlichen Sensor in der axialen Richtung und von ihm weg zu bewegen, wobei das Führungsmittel (814) die Spule (810) am Drehen hindert;
wobei der Kolben (800) mit dem Verschiebungskörper (804) verbunden ist und die Spule oder der Spulenkern der Spule drehbar den Zylinderkörper bedeckt und die Spule oder der Spulenkern der Spule sich nicht in der axialen Richtung bewegen kann.

3. Verschiebungssensor nach Anspruch 1, weiter mit:
einem zylindrischen Körper (706) zum Führen der Bewegung des Kolbens (700) durch eine innere Fläche davon, wobei der zylindrische Körper aus nicht magnetisierbarem Material gemacht ist, ein männlicher Schraubenabschnitt (708) auf eine äußere umgebende Fläche davon gerillt ist;
einem weiblichen Schraubenabschnitt (714), der auf der inneren Fläche des Mittelloches des Spulenkernes (712) der Spule gerillt ist, wobei der weibliche Schraubenabschnitt in Eingriff mit dem männlichen Schraubenabschnitt des zylindrischen Körpers (706) in Eingriff stehen kann;
Tragemittel (722), das dem Zylinder (706) ermöglicht, sich um die Achse (Richtung des Kolbens) zu drehen, während es bewirkt, daß der Zylinder axial fixiert ist; und
Führungsmittel (720) zum Führen des Spulenkernes (712), der sich in der axialen Richtung bewegt, wenn der zylindrische Körper gedreht wird, wobei das Führungsmittel die Spule am Drehen hindert;
wobei der Kolben (700) mit dem Verschiebungskörper (704) verbunden ist.

## Revendications

1. Détecteur de déplacement comprenant une bobine (608) et un plongeur (606), qui est réalisé en matériau magnétisable, prévu dans le trou central (610) de la bobine (608) et pouvant se déplacer par rapport à la bobine (608) dans la direction axiale de celle-ci, où la bobine (608) ou le plongeur (606) est relié à un corps de déplacement (604) de mesure de la quantité de déplacement en mesurant le changement de la réactance ou de la fréquence de la bobine (608);
caractérisé en ce que :
le plongeur (606) comporte un corps et une partie d'extrémité, laquelle partie d'extrémité comprend au moins une face d'extrémité et au moins une face latérale (612a, 612b, 612c, 612d, 612e, 612f, 612g, 612h), la face d'extrémité ayant une périphérie de laquelle au moins une partie coïncide (en plan) avec une partie de la périphérie du corps, et le plan de la face latérale (612a, 612b, 612c, 612d, 612e, 612f, 612g, 612h) n'étant pas parallèle à l'axe du plongeur (606).

2. Détecteur de déplacement selon la revendication 1, comprenant de plus :
un corps cylindrique (806) pour guider le déplacement du plongeur précité (800) par une face interne de celui-ci, le corps cylindrique (806) est réalisé en matériau non magnétisable, et une section de vis mâle (808) est rainurée sur une face entourante externe de celle-ci;
un moyen de support (812) ayant une section de vis femelle qui peut être engagée avec la section de vis mâle (808), ledit moyen de support (812) étant fixé à une position axiale prescrite dans laquelle le corps cylindrique (806) est guidé dans la direction axiale lorsque la section de vis mâle du corps cylindrique tourne; et
un moyen de guidage (814) pour guider la bobine (810) à se déplacer vers et au loin dudit détecteur juste dans la direction axiale, le moyen de guidage (814) empêche la bobine (810) de tourner;
dans lequel le plongeur (800) est relié au corps de déplacement (804) et la bobine ou le support de bobine de la bobine recouvre de façon rotative le corps cylindrique et la bobine ou le corps de bobine de la bobine ne peut pas se déplacer dans la direction axiale.

3. Détecteur de déplacement selon la revendication 1, comprenant de plus :
un corps cylindrique (706) de guidage du déplacement du plongeur précité (700) par une face interne de celui-ci, le corps cylindrique étant réalisé en un matériau non magnétisable, ayant une section de vis mâle (708) rainurée sur une face entourante externe de celle-ci;
une section de vis femelle (714) rainurée sur la face interne du trou central du support de bobine (712) de la bobine précitée, la section de vis femelle étant engageable avec la section de vis mâle du corps cylindrique (706);
un moyen de support (722) permettant au cylindre (706) de tourner autour de l'axe (direction du plongeur) tout en amenant le cylindre à être axialement fixé; et un moyen de guidage (720) pour guider le support de bobine (712) se déplaçant dans la direction axiale lorsque le corps cylindrique tourne, ledit moyen de guidage empêche la bobine de tourner;
dans lequel le plongeur (700) est relié au corps de déplacement (704).
